# EUROPEAN PATENT APPLICATION

(11) **EP 4 825 740 A1**
(43) Date of publication of application: **21.10.2026**
(21) Application number: 26172380.3
(22) Date of filing: 14.04.2026
(51) Int. Cl.: B64F 5/50, B64F 5/10, F01D 25/28, F16M 1/04

(54) **MODULAR FLOOR STAND FOR AIRCRAFT ENGINE**

(30) Priority: 15.04.2025 US 202519179307
(71) Applicant: Pratt & Whitney Canada Corp., Longueuil, Québec J4G 1A1 (CA)
(72) Inventor: IVAN, Bogdan C, (01BE5) Longueuil, J4G 1A1 (CA); BINETTE, Hugo, (01BE5) Longueuil, J4G 1A1 (CA); DUMONT, Sebastien, (01BE5) Longueuil, J4G 1A1 (CA); DEVEAUX, Christophe, (01BE5) Longueuil, J4G 1A1 (CA)
(74) Representative: Dehns

(57) **Abstract**

A modular floor stand (20) for supporting an aircraft engine (30) includes a first cart (40) having a first base (41) equipped with a first set of wheels (42), and first engine support members (43) extending upwardly from the first base (41). The modular floor stand (20) further includes a second cart (50) having a second base (51) equipped with a second set of wheels (52), and second engine support members (53) extending upwardly from the second base (51), the second cart (50) sized and shaped to selectively engage the first cart (40) in a nested arrangement. A linking bar (60) has a first end (60a) detachably connectable to the first cart (40) and a second end (60b) detachably connectable to the second cart (50). The linking bar (60) is configured to rigidly retain the first cart (40) and the second cart (50) in a fixed opposed facing relationship.

## Description

### TECHNICAL FIELD

The invention relates generally to support stands for aircraft engines.

### BACKGROUND

When not mounted on an aircraft, aircraft engines may need to be temporarily stored or parked. For instance, an aircraft engine may need to be supported once the assembly process has been completed, when undergoing testing, or when maintenance or repairs are required. Existing solutions are often large and heavy structures that may lack in manoeuverability and storability. These solutions may also be engine specific, and would thus not be suitable for use with more than one engine. Improvements are thus desired.

### SUMMARY

According to one aspect of the present invention, there is provided a modular floor stand for supporting an aircraft engine above a floor surface, the modular floor stand comprising: a first cart including a first base equipped with a first set of wheels for riding on the floor surface, and first engine support members extending upwardly from the first base; a second cart including a second base equipped with a second set of wheels for riding on the floor surface, and second engine support members extending upwardly from the second base, the second cart sized and shaped to selectively engage the first cart in a nested arrangement; and a linking bar having a first end detachably connectable to one of the first engine support members of the first cart and a second end detachably connectable to one of the second engine support members of the second cart, the linking bar configured to rigidly retain the first cart and the second cart in a fixed opposed facing relationship.

Optionally, and in accordance with the above, the first base of the first cart may include one or more first frame members arranged in a C-shape when viewed from above, the second base of the second cart received in a concave opening of the C-shape formed by the one or more first frame members.

Optionally, and in accordance with any of the above, the linking bar may include a first linking bar section and a second linking bar section displaceable relative to the first linking bar section to vary a length of the linking bar.

Optionally, and in accordance with any of the above, at least one of the first engine support members or the second engine support members may include a lower engine support member section and an upper engine support member section displaceable relative to the lower engine support member section to vary a height of the at least one of the first engine support members or the second engine support members.

Optionally, and in accordance with any of the above, the first cart may include a pair of the first engine support members and a pair of inclined brace members, each of the pair of inclined brace members connecting the first base to one of the pair of the first engine support members.

Optionally, and in accordance with any of the above, the first cart may include a horizontal brace member connecting the pair of inclined brace members to one another.

Optionally, and in accordance with any of the above, the modular floor stand may further comprise an engine mounting bracket removably installed at an upper end of at least one of the first engine support members or the second engine support members.

Optionally, and in accordance with any of the above, the modular floor stand may further comprise a tow bar detachably connectable to one of the first cart or the second cart.

According to another aspect of the present invention, there is provided a modular floor stand for supporting an aircraft engine above a floor surface, the modular floor stand comprising: a first cart including a first base equipped with a first set of wheels for riding on the floor surface, and first engine support members extending upwardly from the first base; a second cart including a second base equipped with a second set of wheels for riding on the floor surface, and second engine support members extending upwardly from the second base; and a linking bar having a first end detachably connectable to the first cart and a second end detachably connectable to the second cart; wherein, in a retracted configuration of the modular floor stand, the second cart is nested within the first cart, and, in an expanded configuration of the modular floor stand, the first cart is rigidly retained, via the linking bar connected to the first cart and to the second cart, in a fixed opposed facing arrangement for supporting the aircraft engine via the first engine support members and the second engine support members.

Optionally, and in accordance with the above, the first base of the first cart may include one or more first frame members arranged in a C-shape when viewed from above, the second base of the second cart received in a concave opening of the C-shape formed by the one or more first frame members.

Optionally, and in accordance with any of the above, the linking bar may include a first linking bar section and a second linking bar section displaceable relative to the first linking bar section to vary a length of the linking bar.

Optionally, and in accordance with any of the above, at least one of the first engine support members or the second engine support members may include a lower engine support member section and an upper engine support member section displaceable relative to the lower engine support member section to vary a height of the at least one of the first engine support members or the second engine support members.

Optionally, and in accordance with any of the above, the first cart may include a pair of the first engine support members and a pair of inclined brace members, each of the pair of inclined brace members connecting the first base to one of the pair of the first engine support members.

Optionally, and in accordance with any of the above, the first cart may include a horizontal brace member connecting the pair of inclined brace members to one another.

Optionally, and in accordance with any of the above, the modular floor stand may further comprise an engine mounting bracket removably installed at an upper end of at least one of the first engine support members or the second engine support members.

Optionally, and in accordance with any of the above, the modular floor stand may further comprise a tow bar detachably connectable to one of the first cart or the second cart.

According to another aspect of the present invention, there is provided a method for assembling a modular floor stand for supporting an aircraft engine, comprising: separating a first wheeled cart from a second wheeled cart nested within the first wheeled cart; positioning the first wheeled cart at a predetermined distance from the second wheeled cart in an opposed facing relationship; and connecting a linking bar to the first wheeled cart and to the second wheeled cart to rigidly retain the first wheeled cart at the predetermined distance from the second wheeled cart.

Optionally, and in accordance with the above, the separating of the first wheeled cart from the second wheeled cart may include separating a C-shaped base member of the second wheeled cart from a concave opening of an additional C-shaped base member of the first wheeled cart in which the second wheeled cart was nested.

Optionally, and in accordance with any of the above, the method may further comprise connecting a tow bar to one of the first wheeled cart or the second wheeled cart.

Optionally, and in accordance with any of the above, the connecting the linking bar to the first wheeled cart and to the second wheeled cart may include displacing a first linking bar section of the linking bar relative to a second linking bar section of the linking bar to adjust a length of the linking bar.

### BRIEF DESCRIPTION OF THE DRAWINGS

Reference is now made to the accompanying figures in which:
FIG. 1 is a perspective view of a modular floor stand for an aircraft engine, according to one or more embodiments;
FIG. 2 is a perspective view of the modular floor stand of FIG. 1 in a partially assembled expanded configuration;
FIG. 3 is a perspective view of the modular floor stand of FIG. 1 in a retracted or nested storage configuration;
FIGS. 4A-4F show an exemplary sequence for moving the modular floor stand of FIG. 1 from the retracted configuration to the expanded configuration; and
FIG. 5 is a flow chart of an exemplary method for assembling the modular floor stand of FIG. 1.

### DETAILED DESCRIPTION

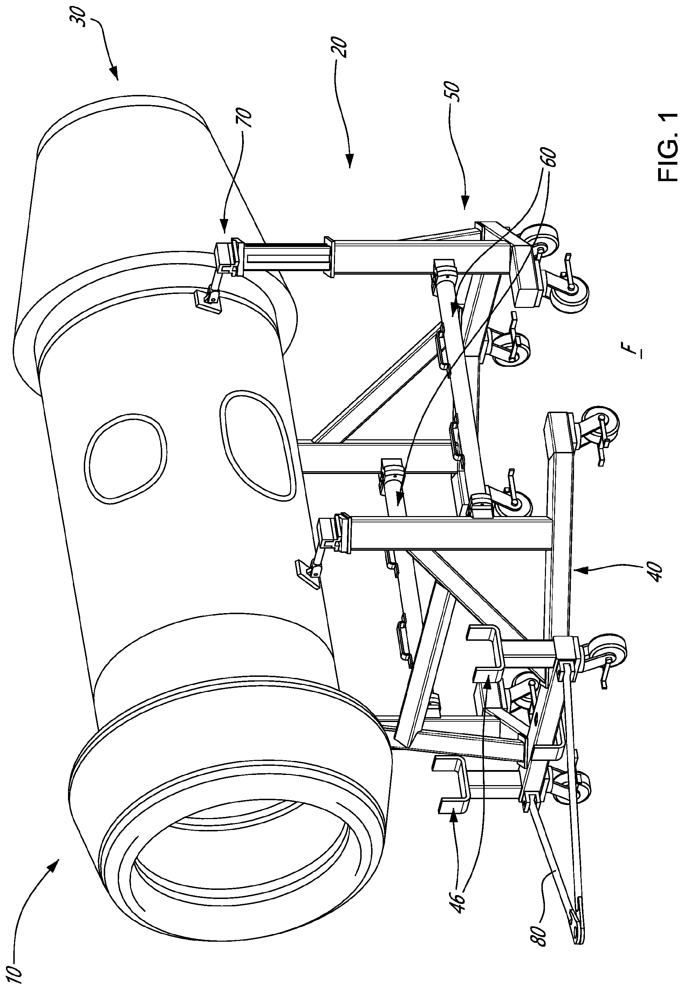

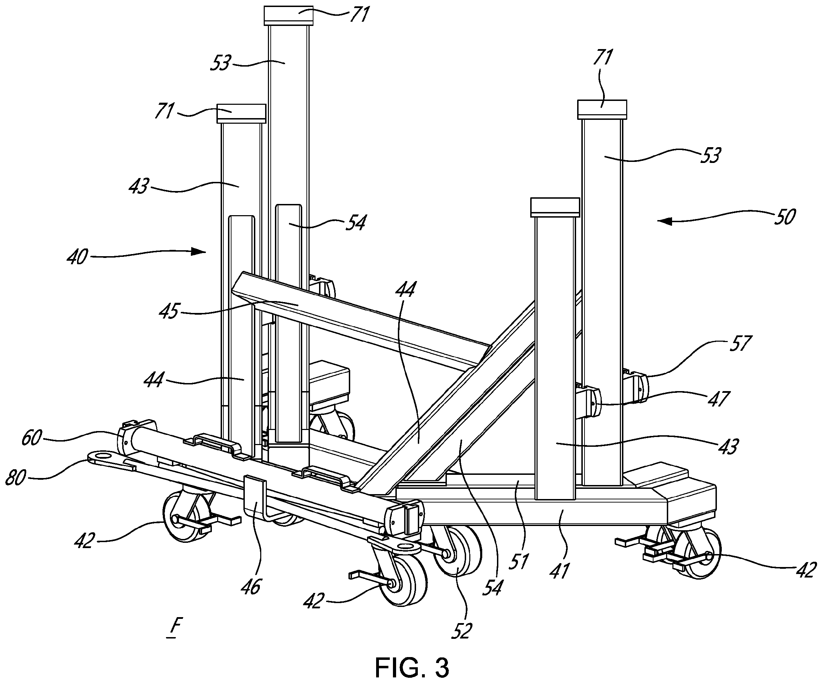

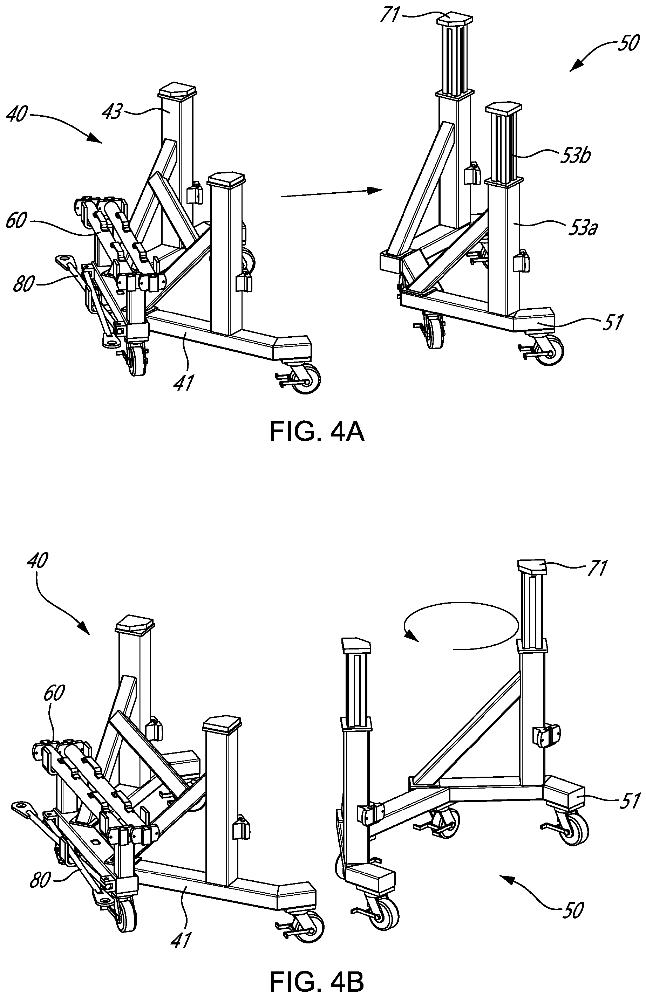

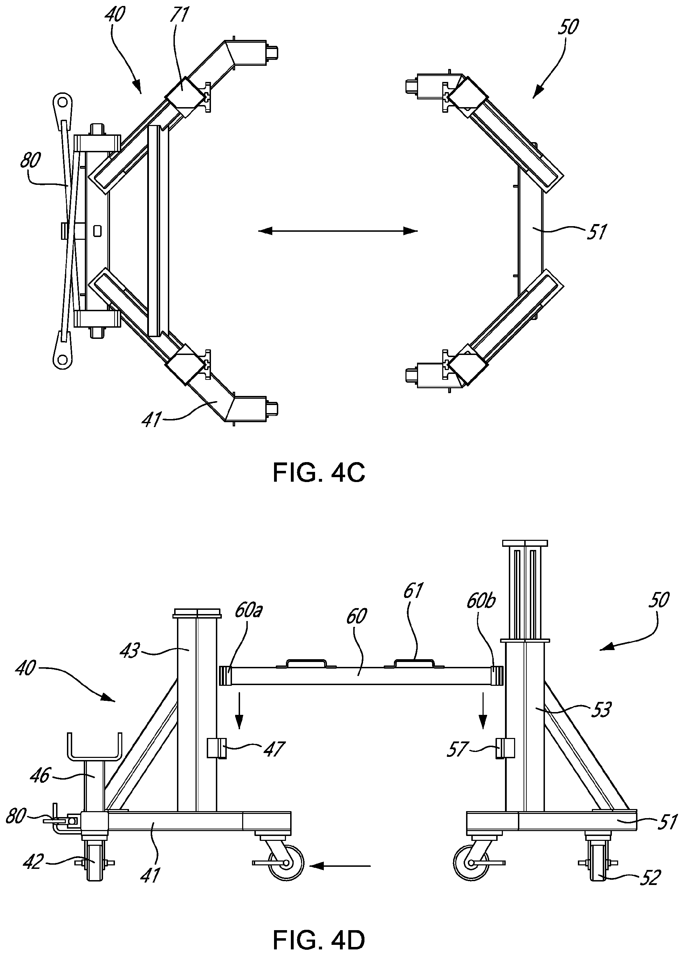

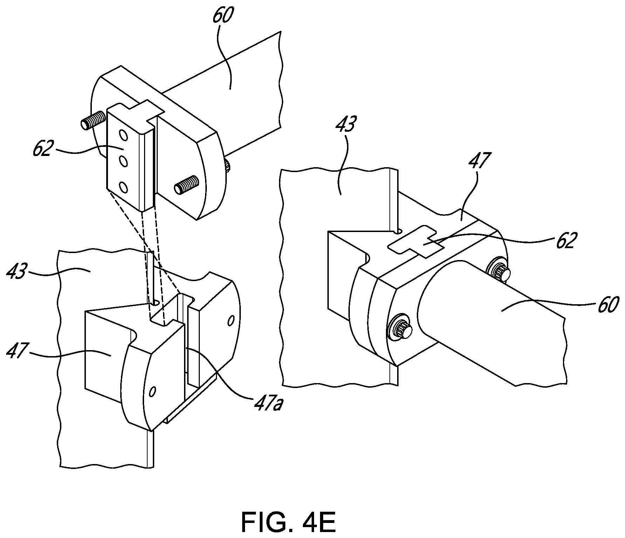

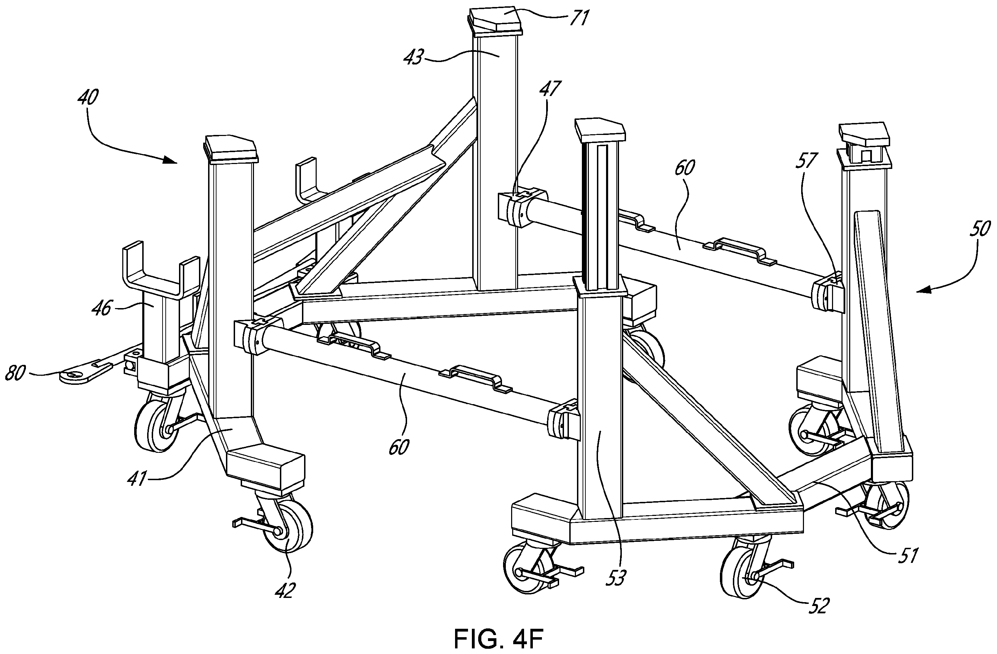

Referring to FIG. 1, there is shown a modular floor stand assembly 10, which includes a support stand 20 operable to support an aircraft engine 30. This provided support may be temporary, for instance, to perform maintenance or testing on the engine 30, or to otherwise allow the engine 30 to be "parked", which may be desired after manufacturing has been completed, during a repair or overhaul process, or the like. The modular floor stand 20 may thus be referred to as a support stand or a parking stand, as an engine 30 may rest (i.e., in a parked or fixed state) on the stand 20 for a given period of time. The stand 20 is operable to support a partially or fully built engine 30. Some embodiments of the stand 20 may be referred to as a universal or quasi-universal floor stand, as it is operable to support various sizes and types of aircraft engines 30. As will be discussed in further detail below, the modular floor stand 20 is also referred to as a collapsible floor stand, as it is movable between an expanded or deployed configuration (see FIGS. 1 and 4) in which the modular floor stand 20 is adapted to support the engine 30, and a retracted or collapsed configuration (see FIG. 3) in which the modular floor stand 20 is in a compact form with a reduced footprint, for instance for to be stored when not in use. It is understood that FIG. 1 depicts the modular floor stand 20 in the expanded configuration, supporting the engine 30 above a floor surface F.

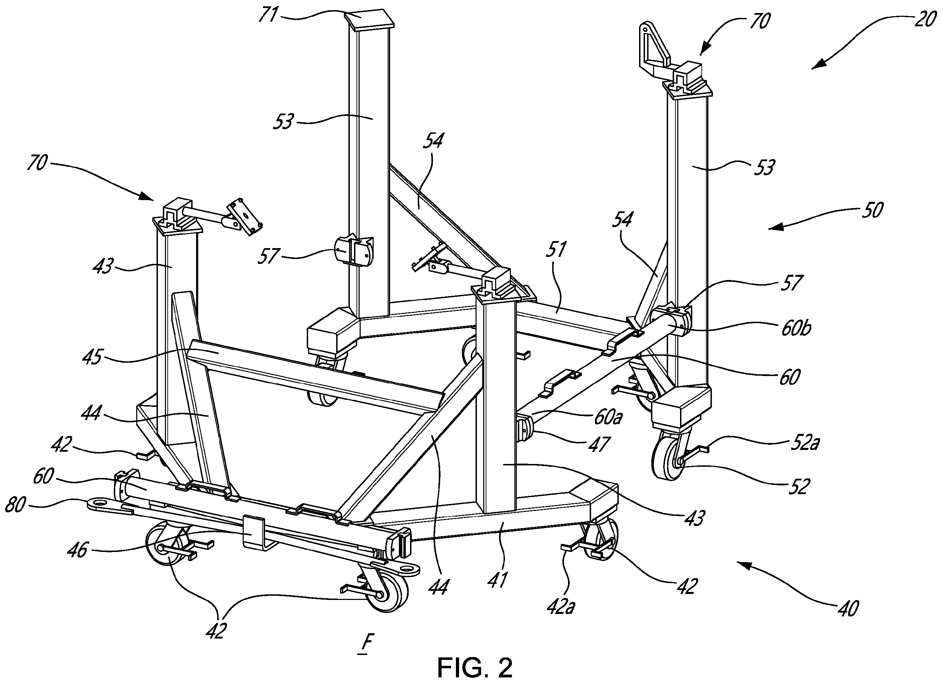

Referring to FIG. 2, the modular floor stand 20 is shown in a partially assembled expanded configuration. The modular floor stand 20 generally includes a first cart 40 and a second cart 50 that can be detachably rigidly interconnected to one another in an opposed facing relationship via one or more linking bars 60. In FIG. 2, the modular floor stand 20 is shown with only one linking bar of a pair of linking bars 60 installed between the two carts 40, 50. In the retracted configuration (see FIG. 3), the first and second carts 40, 50 are configured to be nested or stacked within one another in a compact arrangement and are, thus, sized and shaped similarly, as discussed in further detail below.

Still referring to FIG. 2, the first cart 40 includes a first base 41 equipped with a first set of wheels 42 for riding on the floor surface F. In the shown case, the first base 41, also referred to as a first base member, includes a plurality of straight frame members arranged in a C-shape when viewed from above, thereby defining a concave opening. Other arrangements for the first base 41 are contemplated, for instance a single curved frame member. In the shown case, the first base 41 is provided with four wheels 42, illustratively caster wheels with brakes levers 42a to lock or unlock each wheel 42 to allow or prevent the first cart 40 from rolling along the floor surface F. Other numbers and types of wheels 42 are contemplated. The first cart 40 further includes a plurality, illustratively two, first engine support members 43 extending upwardly from the first base 41. One or more engine mounting brackets or mounts 70 are removably attachable to an upper end of each first engine support member 43 to retain the engine 30 in place. The number of mounts 70 can vary, for instance, based on the type of engine 30 to be supported. For instance, to accommodate an engine 30 with three support points, the modular floor stand 20 can be provided with three mounts 70. Similarly, to accommodate an engine 30 with four support points, the modular floor stand 20 can be provided with four mounts 70. Other numbers of mounts 70 are contemplated. Plates 71 are provided at the upper ends of the first engine support members 43 as well and are adapted to removably receive the mounts 70. As such, the number and types of mounts 70 can be adjusted by installing and removing mounts 70 as required.

Still referring to FIG. 2, in some embodiments, the height of one or more of the first engine support member 43 can be adjustable, for instance with telescoping sections (as discussed in further detail below). The depicted first cart 40 further includes a pair of inclined brace members 44 connecting the first base 41 to a respective first engine support member 43. In the shown case, an optional horizontal brace member 45 is provided to connect the pair of inclined base members 44 to one another. In the shown case, the first cart 40 further includes a bracket 46 for receiving or storing various additional components (e.g., the linking bars 60), as discussed in further detail below. Various bracket 46 types are contemplated. For instance, FIG. 2 shows a first cart 40 having a single, L-shaped bracket 46 attached to the first base 41, whereas FIG. 1 shows a first cart 40 with a pair of U-shaped brackets 46 extending upwardly from the first base 41. Other bracket 46 types are contemplated.

Still referring to FIG. 2, the second cart 50 includes a second base 51 equipped with a second set of wheels 52 for riding on the floor surface F. In the shown case, the second base 51, also referred to as a second base member, includes a plurality of straight frame members arranged in a C-shape when viewed from above, resembling the C-shape of the first base 41 to enable nesting therein. Other arrangements for the second base 51 are contemplated, for instance a single curved frame member. In the shown case, the second base 51 is provided with four wheels 52, illustratively caster wheels with brakes levers 52a to lock or unlock each wheel 52 to allow or prevent the second cart 50 from rolling along the floor surface F. Other numbers and types of wheels 52 are contemplated. The second cart 50 further includes a plurality, illustratively two, second engine support members 53 extending upwardly from the second base 51. One or more engine support brackets or mounts 70 are removably attachable to an upper end of each second engine support member 53 to retain the engine 30 in place, as discussed in further detail below. Plates 71 are provided at the upper ends of the second engine support members 53 as well and are adapted to receive the mounts 70. **In** addition, in embodiments, the height of one or more second engine support member 53 can be adjustable, for instance a lower engine support member section 53a and an upper engine support member section 53b that telescopes relative to the lower engine support member section 53a (see FIG. 4A). Other configurations for varying a height of the engine support members 43, 53 are contemplated. **In** some embodiments, the first engine support members 43 have fixed heights and the second engine support members 53 have adjustable heights. The depicted second cart 50 further includes a pair of inclined brace members 54 connecting the second base 51 to a respective second engine support member 53. While not shown in FIG. 2, in other cases, an optional horizontal brace member (akin to horizontal brace member 45) can be provided to connect the pair of inclined base members 54 to one another. In some cases, a bracket for receiving or storing various components (akin to the bracket 46 of the first cart 40) can be provided. In some cases, both the first cart 40 and second cart 50 include a bracket 46. In other cases, only one of the first cart 40 and second cart 50 include a bracket 46. In yet other cases, the bracket 46 is omitted from both the first cart 40 and the second cart 50.

Still referring to FIG. 2, the modular floor stand 20 includes one or more removable linking bars 60, illustratively two linking bars 60. As shown in FIG. 4D, each linking bar 60 has a first end 60a detachably connectable to one of the first engine support members 43 (illustratively via slotted bracket 47) and a second end 60b detachably connectable to one of the second engine support members 53 (illustratively via slotted bracket 57). Various connections between the linking bar 60 and the engine support members 43, 53 are contemplated. **In** other cases, the linking bar 60 can be connectable to other locations of the first and second cart 40, 50, for instance the first and second bases 41, 51. In the shown case, one or both linking bars 60, when installed, are configured to rigidly retain the first cart 40 and the second cart 50 in a fixed opposed facing relationship, thereby providing the modular floor stand 20 with sufficient rigidity to support an engine 30 thereon. In some cases, each linking bar 60 is adjustable in length to accommodate various sized engines 30. For instance, the linking bar 60 can include a first linking bar section and a second linking bar section displaceable relative to the first linking bar section in a telescoping arrangement to vary an overall length of the linking bar 60. Other length adjustment mechanisms for the linking bar 60 are contemplated. **In** the shown embodiment, the modular floor stand 20 further includes one or more tow bars 80 (illustratively two tow bars 80) for displacing the modular floor stand 20. As shown in FIG. 1, the tow bars 80 are removably connectable to the first base 41 (or alternatively, to the second base 51). In some cases, a towing vehicle (not shown) connects to the free ends of the tow bars 80 to drive the modular floor stand 20 to a desired position, for instance to support an engine 30 or to be stored in a given location.

Referring now to FIG. 3, the modular floor stand 20 is shown in the retracted configuration. As noted above, the depicted first cart 40 has a C-shaped first base 41 creating a concave opening. The second cart 50 is similarly shaped to the first cart 40 (i.e., with a C-shaped second base 51) so that the second cart 50 is received or nested within the concave opening of the first 40 when the modular floor stand 20 is in the retracted configuration. As such, the floor space occupied by the modular floor stand 20 is reduced, thereby allowing the modular floor stand 20 to be stored for future use in a compact manner. Other corresponding or nestable shapes for the first cart 40 and second cart 50 are contemplated.

Referring now to FIGS. 4A-4F, an exemplary assembly procedure for the modular floor stand 20 is shown to switch or move the modular floor stand 20 from the retracted configuration (see FIG. 3) to the expanded configuration (see FIGS. 2 and 4F). In FIG. 4A, the second cart 50 is displaced (e.g., rolled) away from the first cart 40, thereby unnesting or expanding the carts 40, 50. In FIGS. 4B-4C, the second cart 50 is rotated so that it faces the first cart 40 with the concave openings of both carts 40, 50 facing each other. The first and second carts 40, 50 can be positioned at a predetermined distance from one another that generally corresponds to the size of the engine 30 to be supported by the modular floor stand 20. In FIGS. 4D-4E, one or more linking bars 60 are installed to connect the first and second carts 40, 50 to one another and to rigidly retain the first and second carts 40, 50 at the predetermined distance. In some embodiments, the linking bars 60 are removed from the bracket 46 in which they are stored. In other embodiments, the linking bars 60 are stored elsewhere. As noted above, in some embodiments, the linking bars 60 are adjustable in length to accommodate the predetermined distance. In other embodiments, a plurality of linking bars 60 of different lengths can be provided to accommodate different sized engines 30. In the shown case, the linking bars 60 can be manipulated via one or more handles 61 (FIG. 4D) to connect the first and second carts 40, 50 to one another. In addition, referring to FIGS. 4D and 4E, the depicted linking bars 60 include a T-shaped head 62 that is received in a corresponding T-shaped slot 47a in the bracket 47 on one of the first engine support members 43, with a similar T-shaped slot provided in the bracket 57 on one of the second engine support members 53. Other mounting arrangements for the linking bars 60 are contemplated. FIG. 4F shows the modular 20 in the expanded configuration, with two linking bars 60 rigidly coupling the first and second carts 40, 50 in such a way that the modular support stand 20 is available to support an engine 30. While not shown in FIG. 4F, one or more mounts 70 can be installed to one or more upper ends of the various engine support members 43, 53, for instance by coupling to plates 71, for eventual engagement with the engine 30. In embodiments, the modular floor stand 20 can be manipulated and operated by a single worker, for instance due to the separated nature of the carts 40, 50.

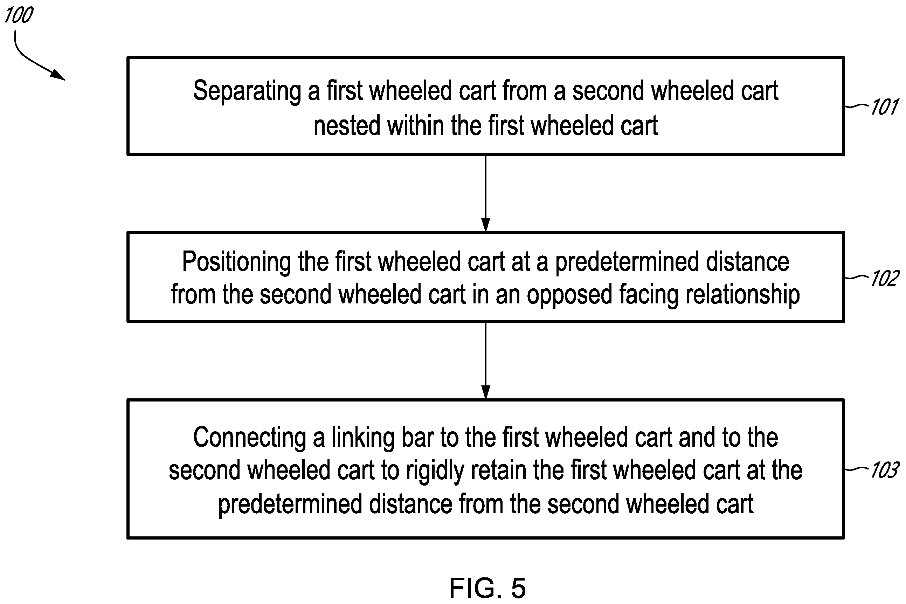

Referring now to FIG. 5, there is shown at 100 an exemplary method for assembling a modular floor stand 20 for an aircraft engine 30. At 101, a first wheeled cart 40 is separated from a second wheeled cart 50 nested within the first wheeled cart 40. At 102, the first wheeled cart 40 is positioned at a predetermined distance from the second wheeled cart 50 in an opposed facing relationship. At 103, a linking bar 60 is connected to the first wheeled cart 40 and to the second wheeled cart 50 to rigidly retain the first wheeled cart 40 at the predetermined distance from the second wheeled cart 50. Various modifications and additions to the method 100 are contemplated.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A modular floor stand (20) for supporting an aircraft engine (30) above a floor surface (F), the modular floor stand (20) comprising:
a first cart (40) including a first base (41) equipped with a first set of wheels (42) for riding on the floor surface (F), and first engine support members (43) extending upwardly from the first base (41);
a second cart (50) including a second base (51) equipped with a second set of wheels (52) for riding on the floor surface (F), and second engine support members (53) extending upwardly from the second base (51), wherein the second cart (50) is sized and shaped to selectively engage the first cart (40) in a nested arrangement; and
a linking bar (60) having a first end (60a) detachably connectable to one of the first engine support members (43) of the first cart (40) and a second end (60b) detachably connectable to one of the second engine support members (53) of the second cart (50), wherein the linking bar (60) is configured to rigidly retain the first cart (40) and the second cart (50) in a fixed opposed facing relationship.

2. The modular floor stand (20) of claim 1, wherein the first base (41) of the first cart (40) includes one or more first frame members arranged in a C-shape when viewed from above, and the second base (51) of the second cart (50) received in a concave opening of the C-shape formed by the one or more first frame members.

3. The modular floor stand (20) of claim 1 or 2, wherein the linking bar (60) includes a first linking bar section and a second linking bar section displaceable relative to the first linking bar section to vary a length of the linking bar (60).

4. The modular floor stand (20) of any preceding claim, wherein at least one of the first engine support members (43) or the second engine support members (53) includes a lower engine support member section (53a) and an upper engine support member section (53b) displaceable relative to the lower engine support member section (53a) to vary a height of the at least one of the first engine support members (43) or the second engine support members (53).

5. The modular floor stand (20) of any preceding claim, wherein the first cart (40) includes a pair of the first engine support members (43) and a pair of inclined brace members (44), each of the pair of inclined brace members (44) connecting the first base (41) to one of the pair of the first engine support members (43).

6. The modular floor stand (20) of claim 5, wherein the first cart (40) further includes a horizontal brace member (45) connecting the pair of inclined brace members (43) to one another.

7. The modular floor stand (20) of any preceding claim, further comprising an engine mounting bracket (70) removably installed at an upper end of at least one of the first engine support members (43) or the second engine support members (53).

8. The modular floor stand (20) of any preceding claim, further comprising a tow bar (80) detachably connectable to one of the first cart or the second cart.

9. A method for assembling a modular floor stand (20) for supporting an aircraft engine (30), comprising:
separating a first wheeled cart (40) from a second wheeled cart (50) nested within the first wheeled cart (40);
positioning the first wheeled cart (40) at a predetermined distance from the second wheeled cart (50) in an opposed facing relationship; and
connecting a linking bar (60) to the first wheeled cart (40) and to the second wheeled cart (50) to rigidly retain the first wheeled cart (40) at the predetermined distance from the second wheeled cart (50).

10. The method of claim 9, wherein the separating the first wheeled cart (40) from the second wheeled cart (50) includes separating a C-shaped base member (51) of the second wheeled cart (50) from a concave opening of an additional C-shaped base member (41) of the first wheeled cart (40) in which the second wheeled cart (50) was nested.

11. The method of claim 9 or 10, further comprising connecting a tow bar (80) to one of the first wheeled cart (40) or the second wheeled cart (50).

12. The method as defined in any of claims 9 to 11, wherein the connecting the linking bar (60) to the first wheeled cart (40) and to the second wheeled cart (50) includes displacing a first linking bar section of the linking bar relative to a second linking bar section of the linking bar to adjust a length of the linking bar (60).
